# EUROPÄISCHE PATENTANMELDUNG

(11) **EP 0 936 746 A1**
(43) Veröffentlichungstag der Anmeldung: **18.08.1999**
(21) Anmeldenummer: 99103113.9
(22) Anmeldetag: 17.02.1999
(51) Int. Cl.: H04B 1/38, H01Q 1/24

(54) **Bereitschaftstasche eines mobiltelefons**

(30) Priorität: 17.02.1998 DE 19806545
(71) Anmelder: Catlak, Almo, 10000 Zagreb (HR)
(72) Erfinder: Catlak, Almo, 10000 Zagreb (HR)
(74) Vertreter: Strasser, Wolfgang, Dipl.-Phys

(57) **Zusammenfassung**

Bei einer Bereitschaftstasche (1) für ein tragbares Fernsprechgerät mit Sendeantenne (12) ist eine Abschirmeinrichtung (10a, 20a) vorgesehen, die im Sprechbetrieb so angeordnet ist, daß sie insbesondere den Kopf des Benutzers gegen die von der Sendeantenne abgegebene elektromagnetische Strahlung abschirmt.

## Beschreibung

Die Erfindung betrifft eine Bereitschaftstasche für ein tragbares Fernsprechgerät mit Sendeantenne der im Oberbegriff des Anspruchs 1 genannten Art.

Bei diesen Fernsprechgeräten handelt es sich insbesondere um Mobiltelefone, die umgangssprachlich auch als 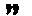 Handy" bezeichnet werden. Die Erfindung ist in gleicher Weise aber auch auf Gegensprechgeräte anwendbar, die nicht über eines der öffentlich zugänglichen Netze, sondern mit einer eigenen Sendefrequenz arbeiten.

Bei allen diesen Fernsprechgeräten werden über die Sendeantenne elektromagnetische Wellen mit einer begrenzten Leistung abgestrahlt, die im allgemeinen in der Größenordnung einiger Watt liegt. Grundsätzlich wird eine derartige Strahlungsstärke für unschädlich gehalten. Es sind aber Bedenken aufgetreten, ob es durch einen sehr häufigen und lange andauernden Gebrauch derartiger Fernsprecheinrichtungen nicht zu Langzeitschädigungen des menschlichen Körpers, insbesondere des Gehirns des Benutzers kommen kann, weil der Abstand zur Sendeantenne im Sprechbetrieb außerordentlich gering ist.

Zur Beseitigung dieses Problems ist es aus der PCT-Anmeldung WO 94/22235 bekannt, in das Fernsprechgerät eine Abschirmung zu integrieren, die aus einer sich in einem geringen Abstand parallel zur Sendeantenne erstreckenden, teleskopartig ausziehbaren, ebenen oder leicht bogenförmig gekrümmten Metallplatten-Anordnung besteht, die sich im Sprechbetrieb zwischen der Sendeantenne und dem Kopf des Benutzers befindet und diesen zu einem erheblichen Teil gegen die von der Sendeantenne abgestrahlte Energie abschirmen soll.

Nachteilig an dieser bekannten Anordnung ist jedoch, daß sie entweder permanent aus dem Gehäuse der betreffenden Fernsprecheinrichtung vorragt, oder dann, wenn sie in dieses einschiebbar ist, im Inneren des Gehäuses einen entsprechenden Platzbedarf aufweist. Angesichts der zunehmenden Miniaturisierung derartiger Fernsprechgerät hat dies dazu geführt, daß praktisch kein auf dem Markt befindliches Mobiltelefon eine derartige Abschirmeinrichtung aufweist.

Andererseits ist es aber allgemein üblich, Mobiltelefone oder vergleichbare Fernsprechgeräte in Bereitschaftstaschen unterzubringen, d.h. in Taschen, aus denen sie beim Sprechbetrieb nicht entnommen werden müssen. Im allgemeinen besitzen diese Bereitschaftstaschen einen Hüllenteil, an dem eine Abdecklasche so angelenkt ist, daß sie im zusammengeklappten Zustand das Bedienfeld der Fernsprecheinrichtung, in welchem sich auch die Hörermuschel und die Mikrofonöffnung befinden, abdeckt. Soll die Fernsprecheinrichtung im Sprechbetrieb benutzt werden, wird diese Abdecklasche hochgeklappt, so daß sowohl eine Anzeigevorrichtung als auch die Eingabe- und Wähltastatur durch eine im Hüllenteil vorgesehene Öffnung hindurch frei zugänglich sind. Im Bereich der Hörmuschel und der Mikrofonöffnung weist der Hüllenteil ebenfalls Öffnungen auf, so daß die Schallwellen ungehindert hindurchtreten können.

Der vorliegenden Erfindung liegt die Aufgabe zugrunde, eine derartige Bereitschaffstasche so weiterzubilden, daß der Benutzer gegen die im Sprechbetrieb abgegebene elektromagnetische Strahlung des Fernsprechgerätes weitgehend abgeschirmt ist.

Zur Lösung dieser Aufgabe sieht die Erfindung die im Anspruch 1 zusammengefaßten Merkmale vor.

Gemäß der Erfindung wird somit die Abschirmeinrichtung nicht mehr in das Fernsprechgerät selbst integriert, sondern bildet einen Bestandteil der Bereitschaftstasche, wo sie so untergebracht werden kann, daß sie außerhalb des Sprechbetriebs nicht über die normalen Konturen der Bereitschaftstasche hinaus ragt, andererseits aber auch keinen Platz innerhalb des Gehäuses des Fernsprechgeräts benötigt und somit dessen weitgehender Miniaturisierung nicht im Wege steht.

Gemäß einer bevorzugten Ausführungsform besitzt die Bereitschaftstasche eine aufklappbare, halbsteife Lasche, die außerhalb des Sprechbetriebs so umgeklappt ist, daß sie flach am Hüllenteil der Bereitschaftstasche anliegt, beim Sprechbetrieb aber so aufgeklappt wird, daß sie sich zwischen der Sendeantenne und dem Kopf des Benutzers befindet. Zur Erzielung der gewünschten Abschirmwirkung kann diese zumindest halbsteife Lasche entweder aus Metall bestehen oder vorzugsweise aus dem gleichen Material wie die Bereitschaftstasche selbst, beispielsweise Leder, gefertigt sein. Im letzteren Fall ist sie dann mit einer Metallschicht versehen, die vorzugsweise von einer dünnen, in das Bereitschaftstaschenmaterial eingebetteten Metallplatte gebildet wird.

Um an der Bereitschaftstasche möglichst wenig aufklappbare Laschen anbringen zu müssen, ist vorzugsweise die Abdecklasche für die Bedienfeldseite des Hüllenteils mit einer derartigen, den Benutzer gegen die elektromagnetische Strahlung der Sendeantenne schützenden Metallschicht ausgestattet.

Die Größe der Abdecklasche für die Bedienfeldseite des Hüllenteils der Bereitschaftstasche ist durch die Größe dieser Bedienfeldseite des Fernsprechgeräts festgelegt. Da sich bei den meisten im wesentlichen quaderförmigen Mobiltelefonen die Sendeantenne in Quader-Längsrichtung über eine der beiden Stirnflächen hinaus erstreckt und dabei in der Nähe einer der kurzen Kanten dieser Stirnfläche angeordnet ist, ragt die Seitenkante der Abdecklasche im aufgeklappten Zustand nicht sehr weit über die Sendeantenne vor, weil die Abdecklasche im allgemeinen an der breiten Kante der Stirnfläche angelenkt ist, um die Breitseite der quaderförmigen Fernsprecheinrichtung abzudecken, in der sich das Bedienfeld befindet.

Um hier die Abschirmwirkung noch weiter zu verbessern, ist gemäß einer besonders bevorzugten Ausführungsform an der aufklappbaren Adecklasche eine weitere aufklappbare, zumindest halbsteife Lasche befestigt, die ebenfalls eine Metallschicht aufweist und so angelenkt ist, daß sie im aufgeklappten Zustand die wirksame Abschirmfläche vergrößert.

Die Anordnung kann so getroffen sein, daß die beiden Laschen im aufgeklappten Zustand in etwa in einer Ebene liegen. Vorzugsweise bildet die weitere aufklappbare Lasche mit der Ebene der ersten aufklappbaren Lasche jedoch einen rechten Winkel derart, daß die Sendeantenne auf zwei Seiten von den abschirmenden Metallschichten umgeben ist, wodurch die Schutzwirkung für den Benutzer weiter erhöht wird.

Vorzugsweise ist die weitere Lasche so umklappbar, daß sie im zusammengeklappten Zustand flach an der ersten Lasche anliegt. Vorzugsweise befindet sie sich dabei zwischen der dem Hüllenteil der Bereitschaftstasche zugewandten Flachseite der ersten Abdecklasche und dem Hüllenteil.

Bei einer bevorzugten Ausführungsform kann zumindest die erste aufklappbare Lasche mit Hilfe eines Verschlusses, der von einem Druckknopf, einem Klettverschluß oder dergleichen gebildet werden kann, im zusammengeklappten Zustand am Hüllenteil der Bereitschaffstasche in lösbarer Weise festgelegt werden.

In diesem Fall ist es besonders bevorzugt, eine Aufklappvorrichtung vorzusehen, die beim Lösen dieses Verschlusses zumindest die erste aufklappbare Lasche, vorzugsweise aber auch die weitere aufklappbare Lasche automatisch in die jeweilige Abschirmposition bringt. Diese Aufklappvorrichtung kann vorzugsweise jeweils von einem in geeigneter Weise befestigten Gummiband gebildet werden, das im zusammengeklappten Zustand gespannt ist und beim Lösen des Verschlusses die jeweilige Lasche in die gewünschte Position zieht.

Diese und weitere vorteilhafte Ausgestaltungen und Eigenschaften der erfindungsgemäßen Bereitschaftstasche sind in den Unteransprüchen niedergelegt.

Die Erfindung wird im folgenden anhand eines Ausführungsbeispiels unter Bezugnahme auf die Zeichnung beschrieben; in dieser zeigen:
- Fig. 1: eine erfindungsgemäße Bereitschaftstasche im zusammengeklappten Zustand und
- Fig. 2: eine erfindungsgemäße Bereitschaffstasche im aufgeklappten, den Sprechbetrieb für ein in der Tasche befindliches Mobiltelefon ermöglichenden Zustand.

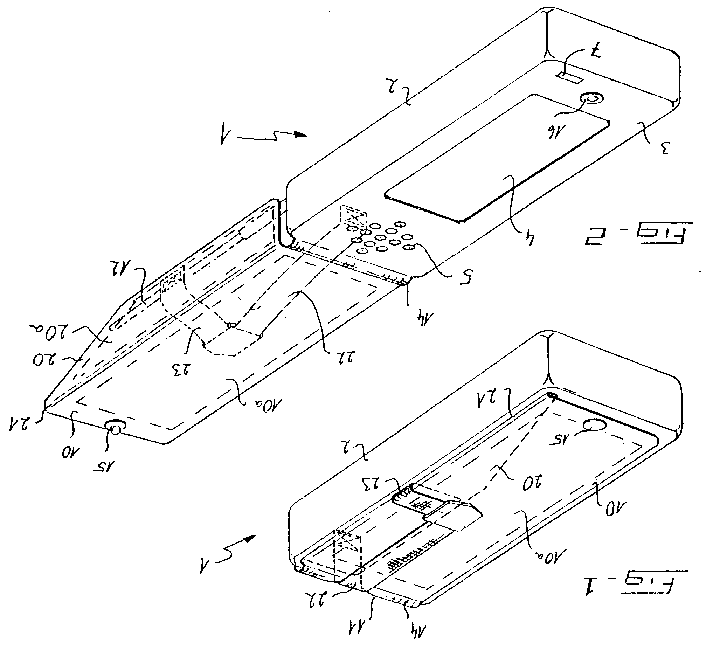

Wie man den Fig. 1 und 2 entnimmt, umfaßt die erfindungsgemäße Bereitschaftstasche 1 einen in etwa quaderförmigen, an die Kontur des aufzunehmenden Fernsprechgeräts angepaßten Hüllenteil 2, der in seiner von der Flachseite gebildeten Bedienfeldseite 3 einen Bedienfelddurchbruch 4 aufweist, der einen ungehinderten Zugang zur Anzeigevorrichtung und den Bedien- und Wähltasten eines nicht dargestellten Fernsprechgerätes, beispielsweise eines Mobiltelefons ermöglicht. Weiterhin sind in der Bedienfeldseite 3 Durchbrüche 5 in dem Bereich vorgesehen, der die Hörmuschel des Fernsprechgerätes abdeckt. In entsprechender Weise ist ein Durchbruch 7 im Bereich der Mikrofonöffnung des Fernsprechgeräts vorgesehen.

Alle diese Durchbrüche werden, wie in Fig. 1 gezeigt, im geschlossenen Zustand von einer Abdecklasche 10 überdeckt, die an der kurzen Kante der Bedienfeldseite 3 mit Hilfe eines Gelenkes 14 in aufklappbarer Weise befestigt ist. Diese kurze Kante führt zu der in den Figuren nicht sichtbaren Stirnseite 11 des Hüllenteils 2, über welche die in Fig. 2 durch gestrichelte Linien angedeutete Sendeantenne 12 des Fernsprechapparates vorsteht, wenn dieser in den Hüllenteil 2 der Bereitschaftstasche 1 eingesteckt ist. Im Bereich der dem Gelenk 14 gegenüberliegenden Endkante der Abdecklasche 10 ist ein im vorliegenden Ausführungsbeispiel von einem Druckknopf 15 und seinem am Hüllenteil 2 befestigten Gegenstück 16 gebildeter Verschluß vorgesehen, mit dessen Hilfe die Abdecklasche 10 im zusammengeklappten Zustand am Hüllenteil 2 in lösbarer Weise festgelegt werden kann.

An der einen Längskante der Abdecklasche 10 ist eine weitere aufklappbare Lasche 20 mit Hilfe eines Gelenks 21 so angelenkt, daß sie aus der in Fig. 1 gezeigten Stellung, in welcher sie flach an der in Fig. 2 oben liegenden Innenseite der Abdecklasche 10 anliegt, in die in Fig. 2 gezeigte Stellung, d.h. etwa um 270° umgeklappt werden kann. Auf diese Weise bildet sie im aufgeklappten Zustand mit der Ebene der Abdecklasche 10 in etwa einen rechten Winkel und umschließt gemeinsam mit der Abdecklasche 10 die Sendeantenne 12 von zwei Seiten. Dadurch ist sichergestellt, daß die in den Abdecklaschen 10 und 20 vorgesehenen Metallschichten 10a und 20a den Benutzer eines in der Bereitschaftstasche 1 untergebrachten Fernsprechgeräts im Sprechbetrieb, in welchem er die durch die Durchbrüche 5 zugängliche Hörmuschel des Fernsprechgeräts an sein Ohr hält, gegen die von der Sendeantenne 12 ausgehende elektromagnetische Strahlung weitgehend abgeschirmen.

Um die Laschen 10 und 20 beim Lösen des Verschlusses 15, 16 automatisch in die in Fig. 2 gezeigte Lage zu bringen, ist eine Aufklappvorrichtung vorgesehen, die beim gezeigten Ausführungsbeispiel von zwei Gummibändern 22, 23 gebildet wird.

Das Gummiband 22 ist einerseits an der Stirnseite 11 des Hüllenteils 2 und andererseits an der in Fig. 1 oben liegenden Außenseite der Abdecklasche 10 befestigt. Die Länge des Gummibandes 22 ist so bemessen, daß es im geschlossenen Zustand (Fig. 1) gedehnt ist und beim Lösen des Verschlusses 15, 16 die Abdecklasche 10 zwangsweise in die in Fig. 2 gezeigte Lage zieht, in welcher die Abdecklasche 10 in etwa in der Ebene der Bedienfeldseite 3 des Hüllenteils 2 liegt. Das Gelenk 14 ist so ausgebildet, daß es ein weitergehendes Umklappen der Lasche 10 verhindert.

In entsprechender Weise ist das Gummiband 23 einerseits an der Außenseite der Lasche 10 und andererseits an der in Fig. 2 hinten, d.h. neben der Sendeantenne 12 befindlichen Außenseite der weiteren aufklappbaren Lasche 20 befestigt. Die Länge des Gummibandes 23 ist so bemessen, daß es die Lasche 20 dann, wenn der Verschluß 15, 16 geöffnet wird und die Lasche 10 genügend weit hochgeklappt ist, die Lasche 20 um etwa 270° in die in Fig. 2 gezeigte Stellung umklappt. Ein weiteres Umklappen wird durch eine entsprechende Ausbildung des Gelenks 21 verhindert.

Für Fernsprechgeräte, bei denen die Sendeantenne 12 über die Stirnfläche 11 nicht, wie in Fig. 2 gezeigt, auf der rechten, sondern auf der linken Seite vorsteht, wird die Lasche 20 an der gegenüberliegenden Längskante der Lasche 10 angelenkt.

Generell können die Gelenke 14 und 21 an jeder beliebigen Kante der Bedienfeldseite 3 des Hüllenteils 2 bzw. der Abdecklasche 10 vorgesehen werde, wenn sichergestellt ist, daß eine über eine beliebige Seitenfläche des Hüllenteils 2 vorstehende Sendeantenne im aufgeklappten Zustand auf wenigstens zwei Seiten abgeschirmt wird.

Da die Breite der weiteren aufklappbaren Lasche 12 kleiner als die halbe Breite der Abdecklasche 10 ist kann gemäß einer weiteren Ausführungsform auch an jeder der beiden Längskanten der Abdecklasche eine entsprechende weitere Abdecklasche vorgesehen sein, von denen jede durch eine automatische Aufklappvorrichtung beim Öffnen des Verschlusses 15, 16 in eine Stellung gebracht wird, in der die in ihr vorgesehene Metallschicht die Abschirmfläche vergrößert.

## Patentansprüche

1. Bereitschaftstasche für ein tragbares Fernsprechgerät mit Sendeantenne, das im Sprechbetrieb in der Bereitschaftstasche am Kopf so gehalten wird, daß sich die Lautsprechermuschel am Ohr und die Mikrofonöffnung in der Nähe des Mundes befinden,
dadurch gekennzeichnet, daß die Bereitschaftstasche (1) eine Abschirmeinrichtung (10a, 20a) umfaßt, die im Sprechbetrieb so angeordnet ist, daß sie insbesondere den Kopf des Benutzers gegen die von der Sendeantenne (12) abgegebene elektromagnetische Strahlung abschirmt.

2. Bereitschaftstasche nach Anspruch 1, dadurch gekennzeichnet, daß sie eine aufklappbare, zumindest halbsteife Lasche (10) aufweist, die eine zur Abschirmeinrichtung (10a, 20a) gehörende Metallschicht (10a) umfaßt und so angelenkt ist, daß sich die Metallschicht (10a) im aufgeklappten Zustand zwischen dem Kopf des Benutzers und der Sendeantenne (12) befindet.

3. Bereitschaftstasche nach Anspruch 2, dadurch gekennzeichnet, daß die aufklappbare Lasche (10) eine Abdecklasche für die Bedienfeldseite (3) des Hüllenteils (3) der Bereitschaftstasche (1) ist, so daß sie für den Sprechbetrieb aufgeklappt werden muß.

4. Bereitschaftstasche nach Anspruch 2 oder 3, dadurch gekennzeichnet, daß die Metallschicht (10a) eine im wesentlichen ebene Metallplatte ist.

5. Bereitschaftstasche nach einem der Ansprüche 2 bis 4, dadurch gekennzeichnet, daß an der aufklappbaren Lasche (10) wenigstens eine weitere aufklappbare, zumindest halbsteife Lasche (20), die eine zur Abschirmung gehörende Metallschicht (20a) umfaßt, so angelenkt ist, daß sie im aufgeklappten Zustand die wirksame Abschirmfläche vergrößert.

6. Bereitschaftstasche nach Anspruch 5, dadurch gekennzeichnet, daß sich die weitere aufklappbare Lasche (20) im aufgeklappten Zustand zur Ebene der ersten aufklappbaren Lasche (10) in etwa unter einem rechten Winkel so erstreckt, daß die Sendeantenne (12) auf zwei Seiten von der Abschirmeinrichtung (10a, 20a) umgeben ist.

7. Bereitschaftstasche nach Anspruch 5 oder 6, dadurch gekennzeichnet, daß die weitere Lasche (20) so umklappbar ist, daß sie im zusammengeklappten Zustand flach an der dem Hüllenteil (2) der Bereitschaftstasche (1) zugewandten Seite der ersten aufklappbaren Lasche (10) anliegt.

8. Bereitschaftstasche nach einem der vorhergehenden Ansprüche, dadurch gekennzeichnet, daß ein Verschluß (15, 16) vorgesehen ist, durch den die erste aufklappbare Lasche (10) im zusammengeklappten Zustand am Hüllenteil (2) der Bereitschaftstasche (1) anliegend festgehalten wird.

9. Bereitschaftstasche nach Anspruch 8, dadurch gekennzeichnet, daß eine Aufklappeinrichtung (22) vorgesehen ist, durch die die Abdecklasche (10) nach Öffnen des Verschlusses (15, 16) automatisch in die Stellung aufgeklappt wird, in der sich die von ihr umfaßte Metallschicht (10a) im Sprechbetrieb zwischen dem Kopf des Benutzers und der Sendeantenne (12) befindet.

10. Bereitschaftstasche nach Anspruch 8 oder 9, dadurch gekennzeichnet, daß eine weitere Aufklappeinrichtung (23) vorgesehen ist, durch die die weitere aufklappbare Lasche (20) nach Öffnen des Verschlusses (15, 16) automatisch in die Stellung aufgeklappt wird, in der die von ihr umfaßte Metallschicht (20a) die wirksame Abschirmfläche vergrößert.

11. Bereitschaftstasche nach Anspruch 9, dadurch gekennzeichnet, daß die Aufklappeinrichtung (22) von einem im zusammengeklappten Zustand gespannten Gummiband (22) gebildet wird, das einerseits am Hüllenteil (2) der Bereitschaftstasche (1) und andererseits auf der Außenseite der ersten aufklappbaren Lasche (10) befestigt ist.

12. Bereitschaftstasche nach Anspruch 10 oder 11, dadurch gekennzeichnet, daß die weitere Aufklappeinrichtung (23) von einem im zusammengeklappten Zustand gespannten Gummiband (23) gebildet wird, das auf der Außenseite sowohl der ersten (10)als auch der weiteren aufklappbaren Lasche (20) befestigt ist.
